# EUROPEAN PATENT SPECIFICATION

(11) **EP 2 829 580 B1**
(45) Date of publication and mention of the grant of the patent: **10.07.2019**
(21) Application number: 13763658.5
(22) Date of filing: 13.03.2013
(51) Int. Cl.: C08L 91/08, C08L 23/02, C08L 23/16

(54) **PROCESS OIL AND RUBBER COMPOSITION**
PROZESSÖL UND KAUTSCHUKZUSAMMENSETZUNG
HUILE DE PROCÉDÉ ET COMPOSITION DE CAOUTCHOUC

(30) Priority: 21.03.2012 JP 2012063656
(43) Date of publication of application: 28.01.2015
(73) Proprietor: Idemitsu Kosan Co., Ltd, Tokyo 100-8321 (JP)
(72) Inventor: ONO, Takashi, Chiba 299-0107 (JP)
(74) Representative: Hoffmann Eitle
(86) International application number: PCT/JP2013/057102
(87) International publication number: WO 2013/141123

(56) References cited:
- WO-A1-2007/034598
- JP-A- H 083 570
- JP-A- S6 172 049
- JP-A- S52 125 562
- JP-A- S60 108 458
- JP-A- S60 219 295
- JP-A- S61 264 055

## Description

### TECHNICAL FIELD

The present invention relates to a process oil and a rubber composition formed by applying the process oil to a natural rubber and a synthetic rubber.

### BACKGROUND ART

A rubber used in various fields such as for machinery and electric products typically contains a process oil to improve mechanical property and processability. The process oil is used as constituents of a plasticizer for a thermoplastic resin and a printing ink and as lubricant or a solvent component used for a softener or the like for a recycle asphalt, as well as being added to a rubber material such as a natural rubber and a synthetic rubber.

In recent years, there have been increasing demands for a rubber composition containing an EPDM (Ethylene-Propylene-Diene Monomer), an olefin thermoplastic elastomer or a styrenic thermoplastic elastomer, the rubber composition being used as an automobile interior material.

Since the rubber composition is required to have heat resistance and weather resistance to be used as the automobile interior material, a white paraffin process oil with a high purity is typically employed. For instance, a process oil exhibiting a Saybolt color of +28 or more and excellent heat resistance and weather resistance is known (see Patent Literature 1).

### CITATION LIST

### PATENT LITERATURE(S)

Patent Literature 1: JP-A-2007-112824

### SUMMARY OF THE INVENTION

### PROBLEM(S) TO BE SOLVED BY THE INVENTION

In recent years, the rubber material, for instance, used for the automobile interior material, has been required to have a higher weather resistance. In general, the thermoplastic elastomer is gradually degraded as being exposed to sunlight. Specifically, in the thermoplastic elastomer, surface crack or brittleness is caused by polymer molecular chains cutting or gelation caused by ultraviolet ray contained in the sunlight, so that the thermoplastic elastomer is no longer suitable for practical use. The process oil contained in rubber significantly influences a shape change due to such a degradation phenomenon.

When a so-called oil extended rubber using the process oil is exposed to the sunlight for a short time, the rubber is only discolored but a shape of the rubber is not changed (e.g., deformed) However, when the rubber is exposed to the sunlight for a long time, the shape change (e.g., deformation, surface crack) of the rubber occurs. Accordingly, such an oil extended rubber may be not suitable for use.

Even the process oil of Patent Literature 1 is not necessarily sufficient for the weather resistance of the oil extended rubber. For instance, when the rubber is exposed to the sunlight for a long time, in addition to the discoloration of the rubber, the shape change (e.g., deformation, surface crack) of the rubber may occur.

An object of the invention is to provide a process oil having an excellent weather resistance and being unlikely to cause a shape change such as deformation of a rubber product when the rubber product is degraded, and to provide a rubber composition using the process oil.

### MEANS FOR SOLVING THE PROBLEM(S)

As a process oil, a paraffinic mineral oil or a naphthenic mineral oil have typically widely been used. The inventor found that a shape change (e.g., deformation and surface crack) of an oil extended rubber is preventable by setting a content of a specific aromatic component in an oil substantially at a predetermined level or less with reference to ultraviolet absorbances of two specific wavelengths, even when the rubber is exposed to sunlight for a long time. The invention is completed based on this finding. Specifically, the invention provides a process oil and a rubber composition as follows.
(1) According to an aspect of the invention, a process oil as defined in claim 1 has properties (a) to (c) below: (a) an ultraviolet absorbance at 198 nm of 2 or less; (b) an ultraviolet absorbance at 228 nm of 0.5 or less; and (c) a kinematic viscosity at 40 degrees C in a range of 25 mm²/s to 450 mm²/s.
(2) According to another aspect of the invention, a rubber composition contains the above-described process oil.
(3) In the rubber composition according to the above aspect of the invention, a rubber material of the rubber composition is at least one selected from an EDPM, an olefin thermoplastic elastomer and a styrenic elastomer.

Because of an excellent weather resistance, when used for the rubber product, the process oil of the invention is unlikely to cause a shape change such as deformation due to degradation of the rubber product. Accordingly, an appearance and a performance of the rubber product are preventable from being deteriorated, so that a lifetime of the rubber product can be prolonged.

### DESCRIPTION OF EMBODIMENT(S)

A process oil according to an exemplary embodiment of the invention has properties (a) to (c) below:
(a) an ultraviolet absorbance at 198 nm of 2 or less;
(b) an ultraviolet absorbance at 228 nm of 0.5 or less; and
(c) a kinematic viscosity at 40 degrees C in a range of 25 mm²/s to 450 mm²/s.

### Ultraviolet Absorbance

It is well known that, when a process oil is contained in rubber, an oil extended rubber gelates or the like by ultraviolet ray due to an influence of an aromatic component in the process oil, thereby causing discoloration. Moreover, since an absorbed amount of the ultraviolet ray represents a content of the aromatic component in the process oil, it is assumable that the larger ultraviolet absorbance indicates the larger content of the aromatic component. Accordingly, in a simple consideration, in order to improve the weather resistance of the process oil, the following is easily conceivable: in order to avoid the influence by the ultraviolet ray, it is only necessary to reduce the content of the aromatic component that is a cause of ultraviolet absorption; in other words, it is only necessary to reduce a value of the ultraviolet absorbance as an index of the content of the aromatic component.

However, since compatibility between the process oil and the rubber is crucial for blending the process oil in the rubber, it is not sufficient to simply reduce the content of the aromatic component. Accordingly, an index for a specific minute content of the aromatic component that would adversely affect the weather resistance is required. However, there have been no findings about the minute content of the aromatic component that affects the shape change of the oil extended rubber left in severe conditions.

The invention disclosed in JP-A-2007-112824 defines an ultraviolet absorbance at a wavelength of 198 nm as an index for weather resistance of the oil extended rubber. However, this index is not always sufficient to prevent the shape change (e.g., deformation) due to an insufficient weather resistance of the oil extended rubber. Although a %CA value by a ring analysis is an index of the aromatic component, the %CA value is not an index for the weather resistance of the oil extended rubber (because the %CA value exceeds 0.1).

In the process oil according to the exemplary embodiment, two ultraviolet absorbances are defined at the wavelengths of 198 nm and 228 nm, whereby not only a hue change of the oil extended rubber but also a shape change thereof when the oil extended rubber is degraded by the ultraviolet ray are controllable.

The process oil according to the exemplary embodiment has (a) an ultraviolet absorbance (at 198 nm) of 2 or less, and (b) an ultraviolet absorbance (at 228 nm) of 0.5 or less. When the two ultraviolet absorbances defined by the above (a) and (b) exceed the respective upper limit values, since the content of the specific aromatic component that adversely affects the weather resistance is large, the weather resistance is likely to be deteriorated to particularly cause the shape change of the oil extended rubber.

Note that it is only necessary to measure the ultraviolet absorbance in accordance with JIS K 0115. Specifically, 2.00 g of a sample is diluted with hexane to be 50 ml, which is then placed in a 10-mm cell and irradiated with the wavelengths of 198 nm and 228 nm for measurement. The hexane is provided as a blank in the measurement.

For a favorable performance of the process oil, a kinematic viscosity at 40 degrees C of the process oil is in a range of 25 mm²/s to 450 mm²/s, preferably in a range of 85 mm²/s to 400 mm²/s.

The process oil which is a mineral oil is exemplarily obtainable by performing hydrocracking, hydrodewaxing, hydrofinishing, hydro-reformation, or hydrorefining to an atmospheric distillation residual oil of paraffin crude, a vacuum distillation fraction of the atmospheric distillation residual oil and a bottom oil obtained from a hydrocracker (fuel oil manufacturing device). Specifically, the process oil according to the exemplary embodiment only need to be a mineral oil satisfying the predetermined requirements in terms of the ultraviolet absorbances at the two wavelengths of 198 nm and 228 nm and the kinematic viscosity.

Since the thus obtained process oil of the exemplary embodiment has the properties (a) to (c) described above, the process oil exhibits a low evaporativity and an excellent weather resistance.

By blending the process oil to the rubber material which is at least one selected from EPDM, olefin thermoplastic elastomer and styrenic elastomer, various rubber compositions can be suitably provided. Moreover, the obtained rubber compositions can be suitably used especially as the automobile interior material that requires weather resistance.

When a rubber (rubber composition) is manufactured using the process oil of the exemplary embodiment, a content of the process oil may be, for instance, 10 mass parts to 50 mass parts, preferably 20 mass parts to 40 mass parts relative to 100 mass parts of the rubber component.

Moreover, when the rubber composition is manufactured, a carbon black, a reinforcer such as a silica, a vulcanizing agent, a vulcanizing accelerator, a filler, a degradation preventing agent such as waxes, a softener other than the process oil of the exemplary embodiment, a plasticizer, etc., which is generally used in rubber industry, may appropriately be blended.

For instance, as long as the process oil has the properties (a) to (c), the procedure to obtain the process oil may appropriately be adjusted.

### Examples

The invention will be described in more detail with reference to Examples and Comparatives, However, it should be appreciated that the scope of the invention is by no means limited by the Examples and the like.

### Manufacturing Example 1 (Example 1)

A paraffin crude was subjected to atmospheric distillation and then the obtained residual oil was subjected to vacuum distillation to provide a fraction. The fraction was subjected to a two-stage hydrogenation process, so that a mineral oil A having a boiling point at an ambient pressure in a range of 335 degrees C to 491 degrees C was obtained. The mineral oil A was provided as a sample oil of Example 1. Properties of the mineral oil A are shown in Table 1.

### Manufacturing Example 2 (Example 2)

A paraffin crude was subjected to atmospheric distillation and the obtained residual oil was subjected to vacuum distillation to provide a fraction. The fraction was subjected to a two-stage hydrogenation process, so that a mineral oil B having the boiling point at the ambient pressure in a range of 367 degrees C to 627 degrees C was obtained. The mineral oil B was provided as a sample oil of Example 2. Properties of the mineral oil B are shown in Table 1.

### Manufacturing Example 3 (Example 3)

A paraffin crude was subjected to atmospheric distillation and the obtained residual oil was subjected to vacuum distillation to provide a fraction. The fraction was subjected to a two-stage hydrogenation process, so that a mineral oil C having the boiling point at the ambient pressure in a range of 409 degrees C to 700 degrees C was obtained. The mineral oil C was provided as a sample oil of Example 3. Properties of the mineral oil C are shown in Table 1.

### Manufacturing Example 4 (Comparative 4)

A paraffin crude was subjected to atmospheric distillation and the obtained residual oil was subjected to vacuum distillation to provide a fraction. The fraction was subjected to a one-stage hydrogenation process, so that a mineral oil D having the boiling point at the ambient pressure in a range of 353 degrees C to 513 degrees C was obtained. The mineral oil D was provided as a sample oil of Comparative 4. Properties of the mineral oil D are shown in Table 2.

### Manufacturing Example 5 (Comparative 5)

A paraffin crude was subjected to atmospheric distillation and the obtained residual oil was subjected to vacuum distillation to provide a fraction. The fraction was subjected to a one-stage hydrogenation process, so that a mineral oil E having the boiling point at the ambient pressure in a range of 405 degrees C to 610 degrees C was obtained. The mineral oil E was provided as a sample oil of Comparative 5. Properties of the mineral oil E are shown in Table 2.

### Manufacturing Example 6 (Comparative 6)

A paraffin crude was subjected to atmospheric distillation and the obtained residual oil was subjected to vacuum distillation to provide a fraction. The fraction was subjected to a one-stage hydrogenation process, so that a mineral oil F having the boiling point at the ambient pressure in a range of 423 degrees C to 732 degrees C was obtained. The mineral oil F was provided as a sample oil of Comparative 6. Properties of the mineral oil F are shown in Table 2.

### Manufacturing Example 7 (Example 7)

A bottom oil obtained from a hydrocracking device (fuel oil manufacturing device) was subjected to hydrodewaxing, hydro finishing and vacuum distillation, so that a mineral oil G having the boiling point at the ambient pressure in a range of 446 degrees C to 598 degrees C was obtained. The mineral oil G was provided as a sample oil of Example 7. Properties of the mineral oil G are shown in Table 1.

### Examples 4 to 6, Comparatives 1 to 3

The mineral oils A to F manufactured in the above Manufacturing Examples were mixed in a predetermined mass ratio to provide sample oils. Properties of the sample oils are shown in Tables 1 and 2.

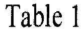

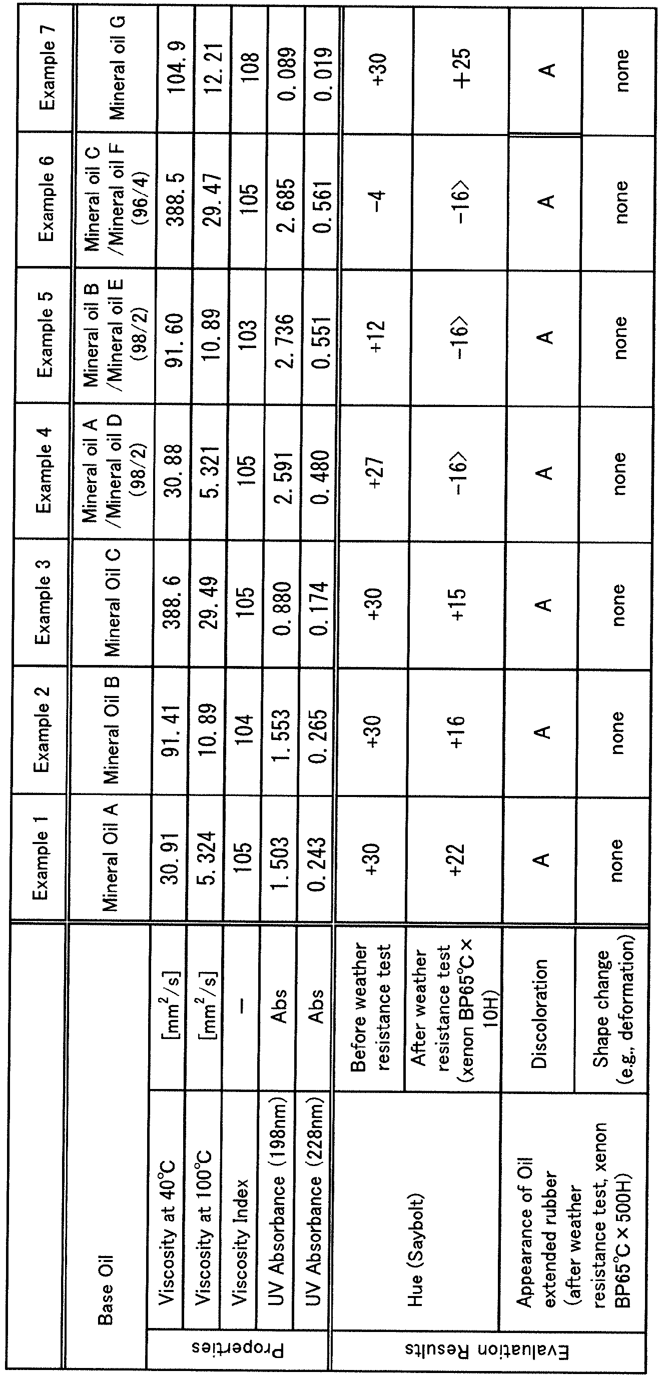

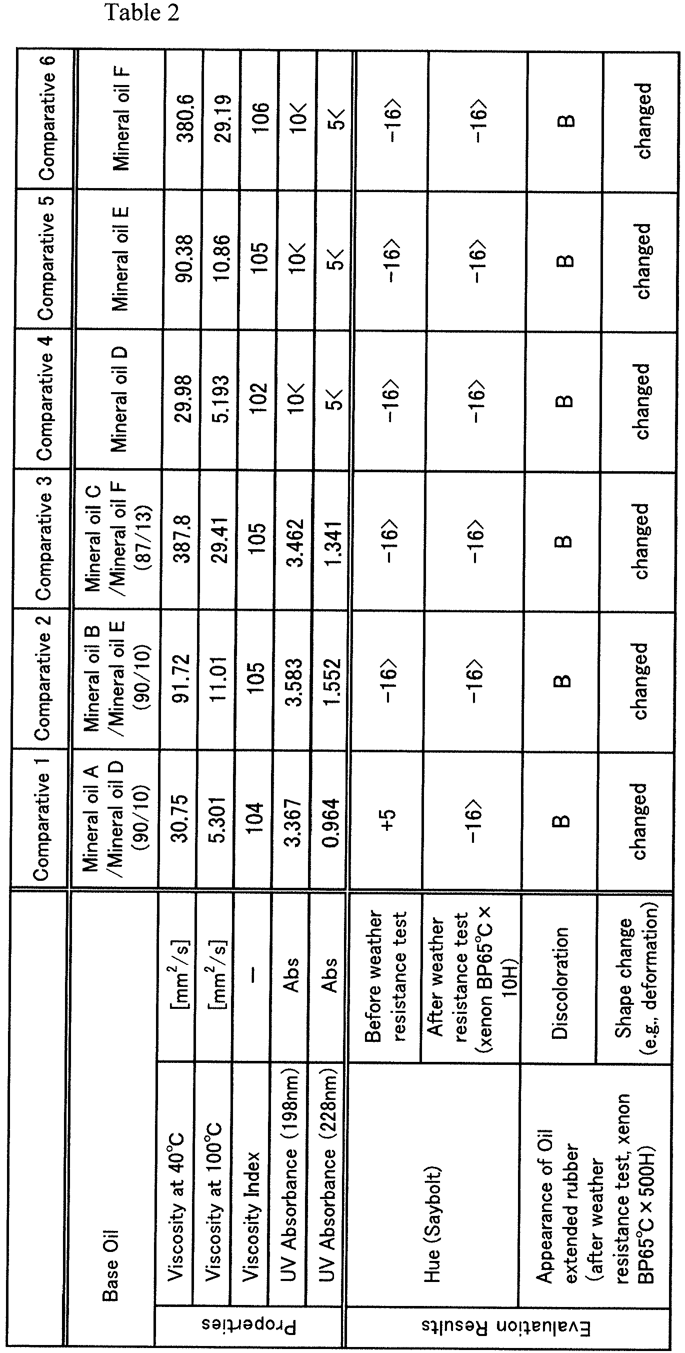

### Test Example 1

For the sample oils of Examples 1 to 7 and Comparatives 1 to 6, the Saybolt colors after the weather resistance test were measured. Properties and the test results of the process oils are shown in Tables 1 and 2. Note that the following test method was employed.

### Weather Resistance Test

50 mL of each of the sample oils was put in a 50-ml glass bottle and was irradiated with light by a xenon lamp at 65 degrees C for 10 hours. Subsequently, a hue (Saybolt) of each of the sample oils was checked (in accordance with JIS K 2580). Note that the time corresponds to a condition in which the sample oils are exposed outdoors for one month in summer.

### Evaluation Results

It is understood from Table 1 that the sample oils of Examples 1 to 7 show the ultraviolet absorbance equivalent to or less than a predetermined value in each of two wavelengths of 198 nm and 228 nm, which indicates that the content of the aromatic component having an adverse effect on the weather resistance is small, so that the Saybolt colors after the weather resistance tests are less changed, which means that the sample oils of Examples 1 to 7 have excellent weather resistance.

On the other hand, as shown in Table 2, the sample oils of Comparatives 1 to 6 exceed the ultraviolet absorbance of at least one of the above two wavelengths, which indicates that the sample oils of Comparatives 1 to 6 have a poor weather resistance, so that all of the sample oils of Comparatives 1 to 6 clearly showed discoloration after the weather resistance test.

### Test Example 2

Using the above-described sample oils, styrene rubber was manufactured as follows.

500 mass parts of each of the sample oils was blended and kneaded with 100 mass parts of styrenic thermoplastic elastomer (manufactured by KURARAY CO., LTD: SEPTON 4033) to provide a rubber composition. The rubber composition was heated into a fluid condition, put into a stainless steel container, and cooled to the room temperature into a solid condition. Subsequently, the obtained oil-extended rubber was cut into a 3-cm cube.

The obtained cubic rubber piece was subjected to a weather resistance test in which the rubber piece was irradiated with light using a xenon lamp at a temperature of 65 degrees for 500 hours. A discoloration of the rubber and presence or absence of a shape change (e.g., deformation) thereof were visually observed. The discoloration of the rubber was evaluated according to the following standard.
A: not discolored
B: discolored

### Evaluation Results

When the sample oils of Examples 1 to 7 were used as the process oil as shown in Table 1, it was confirmed that the rubber was not discolored and a shape change (e.g., deformation) of the rubber was not generated. Accordingly, the process oil of the invention can prolong a substantial lifetime of the rubber product.

In contrast, when the sample oils of Comparatives 1 to 6 were used, the rubber was discolored and a shape change (e.g., deformation) of the rubber was severely generated as the process oil as shown in Table 2, so that the sample oils of Comparatives 1 to 6 have difficulty in practical use.

### INDUSTRIAL APPLICABILITY

A process oil of the invention is suitably applicable to a process oil for manufacturing a rubber product used as an automobile interior material and the like.

## Claims

1. A process oil which is a mineral oil obtainable through a two-stage hydrogenation process of a fraction obtained by subjecting a paraffin crude to an atmospheric distillation and subjecting a residual oil of the atmospheric distillation to a vacuum distillation,
the process oil having properties (a) to (c) below:
(a) an ultraviolet absorbance (198 nm) of 2 or less;
(b) an ultraviolet absorbance (228 nm) of 0.5 or less; and
(c) a kinematic viscosity at 40 degrees C in a range of 25 mm²/s to 450 mm²/s, wherein the ultraviolet absorbance is measured according to JIS K 0115 as follows: 2.00 g of a sample is diluted with hexane to be 50 ml, which is then placed in a 10 mm cell and irradiated with the wavelengths of 198 nm and 228 nm for measurement, wherein hexane is provided as a blank.

2. A rubber composition comprising the process oil according to claim 1.

3. The rubber composition according to claim 2, comprising 10-50 mass parts of said process oil relative to 100 mass parts of said rubber material.

4. The rubber composition according to claim 2 or 3, wherein
a rubber material of the rubber composition is at least one selected from an EDPM, an olefin thermoplastic elastomer and a styrenic elastomer.

## Patentansprüche

1. Prozessöl, das ein Mineralöl ist, erhalten durch ein zweistufiges Hydrierungsverfahren einer Fraktion, erhalten durch Durchführen einer atmosphärischen Destillation mit rohem Paraffin und Durchführen einer Vakuumdestillation mit einem restlichen Öl aus der atmosphärischen Destillation,
wobei das Prozessöl die unten gezeigten Eigenschaften (a) bis (c) hat:
(a) ein Ultraviolettabsorptionsvermögen (198 nm) von 2 oder weniger,
(b) ein Ultraviolettabsorptionsvermögen (228 nm) von 0,5 oder weniger und
(c) eine kinematische Viskosität bei 40°C in einem Bereich von 25 bis 450 mm²/s,
worin das Ultraviolettabsorptionsvermögen entsprechend JIS K 0115 wie folgt gemessen wird: 2,00 g einer Probe werden mit Hexan auf 50 ml verdünnt, die Mischung wird dann in eine 10 mm-Zelle gegeben und mit den Wellenlängen von 198 nm und 228 nm für die Messung bestrahlt, worin Hexan als Blanko verwendet wird.

2. Kautschukzusammensetzung, enthaltend das Prozessöl gemäß Anspruch 1.

3. Kautschukzusammensetzung gemäß Anspruch 2, enthaltend 10 bis 50 Masseteile des Prozessöls in Bezug auf 100 Masseteile des Kautschukmaterials.

4. Kautschukzusammensetzung gemäß Anspruch 2 oder 3, worin ein Kautschukmaterial aus der Kautschukzusammensetzung zumindest eines ist, ausgewählt aus einem EDPM, einem thermoplastischen Olefinelastomer und einem styrolischen Elastomer.

## Revendications

1. Huile de procédé qui est une huile minérale qui peut être obtenue par un procédé d'hydrogénation en deux étapes d'une fraction obtenue en soumettant une paraffine brute à une distillation atmosphérique et en soumettant une huile résiduelle de la distillation atmosphérique à une distillation sous vide,
l'huile de procédé ayant des propriétés (a) à (c) ci-dessous :
(a) une absorbance ultraviolette (198 nm) de 2 ou moins ;
(b) une absorbance ultraviolette (228 nm) de 0,5 ou moins ; et
(c) une viscosité cinématique à 40 degrés C dans un domaine de 25 mm²/s à 450 mm²/s,
dans laquelle l'absorbance ultraviolette est mesurée selon JIS K 0115 comme suit : 2,00 g d'un échantillon est dilué avec de l'hexane de sorte à être 50 ml, qui est ensuite placé dans une cellule de 10 mm et irradié avec les longueurs d'onde 198 nm et 228 nm pour la mesure, dans laquelle du hexane est utilisé en tant qu'étalon.

2. Composition de caoutchouc comprenant l'huile de procédé selon la revendication 1.

3. La composition de caoutchouc selon la revendication 2, comprenant 10-50 parties en masse de ladite huile de procédé par rapport à 100 parties en masse dudit matériau caoutchouteux.

4. La composition de caoutchouc selon la revendication 2 ou3, dans laquelle
un matériau caoutchouteux de la composition de caoutchouc est au moins choisi parmi un EDPM, un élastomère thermoplastique oléfine et un élastomère styrènique.
